# EUROPEAN PATENT SPECIFICATION

(11) **EP 2 797 742 B1**
(45) Date of publication and mention of the grant of the patent: **05.07.2017**
(21) Application number: 12815966.2
(22) Date of filing: 27.12.2012
(51) Int. Cl.: B32B 7/06, B32B 27/08, B32B 27/32

(54) **RETORTABLE EASY OPENING SEALS FOR PACKAGING FILM**
AUTOKLAVIERBARE, LEICHT ZU ÖFFNENDE ABDICHTUNG FÜR VERPACKUNGSFOLIE
FERMETURE ÉTANCHE AUTOCLAVABLE AVEC OUVERTURE FACILE POUR FILM D'EMBALLAGE

(30) Priority: 28.12.2011 US 201161580815 P
(43) Date of publication of application: 05.11.2014
(73) Proprietor: Dow Global Technologies LLC, Midland, MI 48674 (US)
(72) Inventor: BILLOUARD, Cyrille, 40200 Mimizan (FR); PARKINSON, Shaun, E-43007 Tarragona (ES); WU, Xiaosong, Sugarland, TX 77479 (US); GARNETT, John W., Missouri City, TX 77459 (US)
(74) Representative: Boult Wade Tennant
(86) International application number: PCT/US2012/071825
(87) International publication number: WO 2013/101931

(56) References cited:
- WO-A1-2007/044159
- US-A1- 2004 151 932
- US-A1- 2010 260 996
- "Flint Hills Resources: Polypropylene 13M11A", , September 2008 (2008-09), XP055058159, Retrieved from the Internet: URL:http://www.fhr.com/upload/13M11A.pdf [retrieved on 2013-03-28]
- HONGJUN CAI ET AL: "Structure and Properties of Impact Copolymer Polypropylene. I. Chain Structure", JOURNAL OF APPLIED POLYMER SCIENCE, vol. 71, 1999, pages 93-101, XP055058140,

## Description

### Field of the invention

The invention relates to a polyolefin-based heat sealable, retortable easy opening seal. The invention also relates to methods of making and using the heat sealable, retortable easy opening seal.

### Background and summary of the invention

Heat sealable and easy-opening films are employed on a large scale for temporarily closing containers that include, for example, food products. During use, a consumer tears away the peelable film. To gain consumer acceptance, a number of characteristics associated with a heat sealable and peelable film are desired.

Heat sealable films must be capable of being sealed upon the application of heat. During typical sealing processes, the backing or web layer of the film comes into direct contact with a heated surface such as a sealing jaw. Heat is thus transferred through the backing layer of the film to melt and fuse the inner sealant layer to form a seal. Accordingly the backing layer generally has a higher melting temperature than the inner sealant layer so that the backing layer of the film does not substantially melt and therefore does not stick to the heated surface.

Moreover, if the package to be sealed is designed to contain food, particularly unrefrigerated food, then in order for the product to have an acceptable shelf life (for example at least six months) the seal should be capable of surviving a retort operation. A typical retort process subjects the sealed package to a temperature of 100°C. to 135°C. for 20 to 60 minutes or even up to 100 minutes, depending on the size of the container. During the retort process, gases are generated within the package and pressure increases greatly. Although the retort system may include an over pressure to help balance the package internal pressures, the net result will still be a pressurized package during retorting. Thus, the films used to seal the container must be sufficiently strong to withstand the increased internal pressure and the elevated temperatures.

Because of the need to withstand such pressures, seals used in retort applications are typically difficult to open at room temperature using average manual force. It would be desirable to have a heat sealable film which could withstand the conditions of retort applications yet still be easily opened manually by a consumer. The force required to pull a seal apart is called "seal strength" or "heat seal strength" which can be measured in accordance with ASTM F88-94. The desired seal strength varies according to specific end user applications. For flexible packaging applications, such as cereal liners, snack food packages, cracker tubes and cake mix liners, the seal strength desired is generally in the range of 0.18-1.6 kilograms per centimeter. For example, for easy-open cereal box liners, a seal strength in the range of 0.35-0.52 kilograms per centimeter is commonly specified, although specific targets vary according to individual manufactures requirements. In addition to flexible packaging application, a sealable and peelable film can also be used in rigid package applications, such as lids for convenience items (e.g., snack food such as puddings) and medical devices. Typical rigid packages have a seal strength of 0.18-0.9 kilograms per centimeter. The seal layer can be on the lid or on the container or both.

Another desired property for the heat-sealable films is adequate "hot tack". After the film is removed from contact with the heated surface and/or the retort process, the film is cooled to room temperature. Before the inner sealant layer is cooled to room temperature, it should be able to maintain its seal integrity. The ability of an adhesive or sealant layer to resist creep of the seal while it is still in a warm or molten state is generally referred to as "hot tack." To form a good seal, the hot tack of the sealable and peelable film should be adequate.

It is also desirable to have a low heat seal initiation temperature which helps to ensure fast packaging line speeds and a broad sealing window which could accommodate variability in process conditions, such as pressure and temperature. A broad sealing window also enables high speed packaging of heat sensitive products, as well as, provides a degree of forgiveness for changes in packaging or filling speeds.

Additional desired characteristics for heat sealable films include a low coefficient of friction and good abuse resistance. A low coefficient of friction ensures that the sealant layer can be processed smoothly and efficiently on fabrication and packaging equipment and is particularly important for vertical form-fill-and-seal packaging. Good abuse resistance and toughness is desired, for example, in cereal box liners to withstand tears and punctures from irregularly-shaped, rigid cereals. Additional characteristics include taste and odor performance and barrier or transmission properties.

It has been discovered that certain multilayer films will achieve one or more of the above stated goals, and thus be particularly well suited for retort applications. The multilayer film comprises a first outer layer which is heat sealable. The first outer layer comprises from 95 to 100 percent (by weight of the first outer layer) of a first polymer, said first polymer being derived from propylene monomer and optionally one or more comonomers selected from the group consisting of ethylene and C₄-C₈ alpha olefins. The first polymer has a melting point of at least 125°C. The multilayer film further comprises an inner portion adjacent to the first outer layer. The inner portion may be a single layer or may comprise several layers. At least one layer of the inner portion comprises an elastomeric propylene based polymer ("EPBP"). Further at least one layer of the inner portion comprises a second polymer, wherein the second polymer is selected from the group consisting of high pressure low density polyethylene, high density polyethylene, ethylene acrylic acid copolymers, ethylene (meth) acrylic acid copolymers and combinations thereof. The second polymer may be together with the EPBP in the same layer or may be in a separate layer. It is also contemplated that the inner portion may optionally comprise one or more additional layers, which may or may not contain EPBP or the second polymer. The multilayer film further comprises a second outer layer arranged so that the inner portion is encapsulated between the first outer layer and the second outer layer. The second outer layer comprises a third polymer, wherein said third polymer is selected from the group consisting of homopolymer polypropylene, random copolymer polypropylene and impact copolymer polypropylene and blends thereof.

U.S. Patent Publication No. 2004/0151932 to Galloway is directed to sealant films comprising a first sealant layer which readily and easily delaminates or peels from a second adjacent film layer. The first sealant layer and the second adjacent layer of the sealant film comprise propylene or ethylene moieties wherein the propylene or ethylene moieties may be homopolymers or copolymers. The film structures can be used independently, or laminated to a second film structure wherein the second film structure may comprise a single layer or multiple layers. The sealant films can be heat sealed to a packaging component, such as a tray either as a single film structure or as a laminate comprising a second film structure. The sealant film structures may be used as retortable lidstock. The sealant films disclosed by Galloway do not however possess the desired retort properties.

### Detailed description of the invention

The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

"Melt strength" which is also referred to in the relevant art as "melt tension" is defined and quantified herein to mean the stress or force (as applied by a wind-up drum equipped with a strain cell) required to draw a molten extrudate at a haul-off velocity at which the melt strength plateaus prior to breakage rate above its melting point as it passes through the die of a standard plastometer such as the one described in ASTM D1238-E. Melt strength values, which are reported herein in centi-Newtons (cN), are determined using a Gottfert Rheotens at 190°C.

The present invention relates to a multilayer film particularly well-suited for heat seals used in retort applications. The multilayer film comprises a first outer layer which is heat sealable. The first outer layer comprises from 95 to 100 percent (by weight of the first outer layer) of a first polymer, said first polymer being derived from propylene monomer and optionally one or more comonomers selected from the group consisting of ethylene and C₄-C₈ alpha olefins. Such first polymer can be homopolymer polypropylene but is more preferably a random copolymer of units derived from propylene and from 0.1 to 10% of units derived from ethylene and/or one or more alpha-olefin monomers having from four to eight carbon atoms. The limits as to the amount of comonomer will depend in part upon the polymerization method, including catalyst selection (single site, metallocene, post metallocene, Ziegler-Natta, etc.) chosen. The first polymer should have a melt flow rate ("MFR") of from 0.5 to 25 g/10 min (as determined according to ASTM D1238, 2.16 kg, 230°C), more preferably from 2 to 1 g/10 min. The particular MFR selected will depend in part on the intended fabrication methods such as blown film, extrusion coating, sheet extrusion, or cast film processes. The first polymer may have a density (as determined according to ASTM D-792) from 0.890 to 0.902 g/cm³. The first polymer should have a melting point (as determined according to the DSC method described below) of at least 125°C, more preferably at least 130°C or 135°C.

The first outer layer may optionally contain up to 5 percent (by weight of the first outer layer) of an elastomeric propylene-based polymer or "EPBP". EPBPs comprise at least one copolymer with at least 50 weight percent of units derived from propylene and at least 5 weight percent of units derived from a comonomer other than propylene, preferably ethylene. Suitable elastomeric propylene based polymers include the propylene based plastomers or elastomers ("PBPE's") taught in WO03/040442, and WO/2007/024447. Of particular interest for use in the present invention are EPBP's having a molecular weight distribution of less than 3.5, including reactor grade PBPE's. The term "reactor grade" refers to a polyolefin resin whose molecular weight distribution (MWD) or polydispersity has not been substantially altered after polymerization. The term molecular weight distribution or "MWD" is defined as the ratio of weight average molecular weight to number average molecular weight (M_{w}/Mₙ). M_{w} and Mₙ are determined according to methods known in the art using conventional GPC. The preferred EPBP will have a heat of fusion (as determined using the DSC method described in WO2007/024447) less than 90 Joules/gm, preferably less than 70 Joules/gm, more preferably less than 50 Joules/gm. When the preferred comonomer ethylene is used, the EPBP has from 3 to 15 percent of ethylene, or from 5 to 14 percent of ethylene, or 7 to 12 percent ethylene, by weight of the EPBP.

Other comonomers which may be used instead of, or in addition to the preferred ethylene comonomer in the EPBP include C₄₋₂₀ α-olefins, C₄₋₂₀ dienes, styrenic compounds and the like. Preferably the comonomer is at least one of ethylene and a C₄₋₁₂ α-olefin such as 1-hexene or 1-octene. Preferably, the remaining units of the copolymer are derived only from ethylene. The amount of comonomer other than ethylene in the propylene based elastomer or plastomer is a function of, at least in part, the comonomer and the desired heat of fusion of the copolymer. If the comonomer is ethylene, then typically the comonomer-derived units comprise not in excess of 15 wt % of the copolymer. The minimum amount of ethylene-derived units is typically at least 3, preferably at least 5 and more preferably at least 9, wt % based upon the weight of the copolymer. If the polymer comprises at least one other comonomer other than ethylene, then the preferred composition would have a heat of fusion approximately in the range of a propylene-ethylene copolymer with 3 to 20 wt.% ethylene.

The EPBPs of this invention can be made by any process, and includes copolymers made by CGC (Constrained Geometry Catalyst), metallocene, and nonmetallocene, metal-centered, heteroaryl ligand catalysis. These copolymers include random, block and graft copolymers although preferably the copolymers are of a random configuration. Exemplary propylene copolymers include Exxon-Mobil VISTAMAXX™ polymer, and VERSIFY™ propylene/ethylene elastomers and plastomers by The Dow Chemical Company.

The density of the propylene based elastomers or plastomers of this invention is typically at least 0.850, can be at least 0.860 and can also be at least 0.865 grams per cubic centimeter (g/cm³) as measured by ASTM D-792. Preferably the density is less than 0.89 g/cc. In general the lower the density, the lower the haze.

The weight average molecular weight (Mw) of the propylene based elastomers or plastomers of this invention can vary widely, but typically it is between 10,000 and 1,000,000 (with the understanding that the only limit on the minimum or the maximum M_{w} is that set by practical considerations). For homopolymers and copolymers used in the manufacture of peelable seals, preferably the minimum Mw is about 20,000, more preferably about 25,000.

The polydispersity of the elastomeric propylene based polymers of this invention is typically between 2 and 5. In general for low haze, it is preferred to use material with a narrow polydispersity. "Narrow polydispersity", "narrow molecular weight distribution", "narrow MWD" and similar terms mean a ratio (M_{w}/Mₙ) of weight average molecular weight (M_{w}) to number average molecular weight (Mₙ) of less than 3.5, can be less than 3.0, can also be less than 2.8, can also be less than 2.5.

The EPBPs for use in the first outer layer of the present invention ideally have an MFR of from 0.5 to 25 g/10min, preferably from 1 to 15, more preferably from 2 to 10. MFR for copolymers of propylene and ethylene and/or one or more C₄-C₂₀ α-olefins is measured according to ASTM D-1238, condition L (2.16 kg, 230 degrees C).

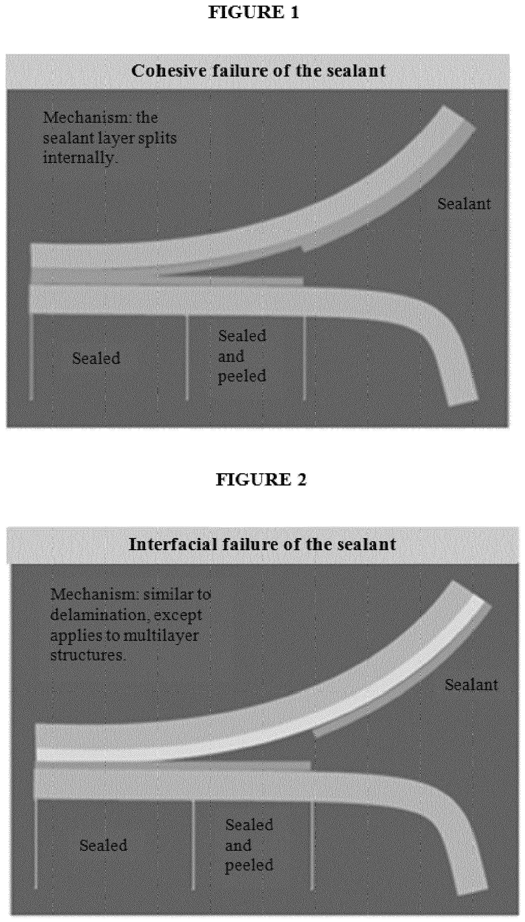

The multilayer films of the present invention further comprise an inner portion which is adjacent to the first outer layer. The inner portion may comprise a single layer or multiple layers, including microlayers. At least one layer of the inner portion comprises an EPBP as described above. Further at least one layer of the inner portion comprises a second polymer, wherein the second polymer is selected from the group consisting of high pressure low density polyethylene, high density polyethylene, ethylene acrylic acid copolymers, ethylene (meth) acrylic acid copolymers and combinations thereof. The second polymer may be together with the EPBP in the same layer or may be in a separate layer. Without being bound to any particular theory, it is believed that including the second polymer in the same layer as the EPBP results in a burst cohesive failure mechanism as depicted in Figure 1 whereas including the second polymer in a separate layer results in a burst delaminating failure mechanism as depicted in Figure 2.

The second polymer for use in the inner portion is selected from the group consisting of high pressure low density polyethylene, high density polyethylene, ethylene acrylic or (meth) acrylic acid copolymers and combinations thereof. The term "high pressure low density polyethylene" may also be referred to as "LDPE", "high pressure ethylene polymer" or "highly branched polyethylene" and is defined to mean that the polymer is partly or entirely homopolymerized or copolymerized in autoclave or tubular reactors at pressures above 100 MPa (14,500 psi) with the use of free-radical initiators, such as peroxides (see for example US 4,599,392). It is preferred that the LDPE, if present, has a melt index (as determined according to ASTM D1238, 2.16 kg, 190°C) of from 0.5 to 35 g/10 min, more preferably from 2 to 10 g/ 10 min, and a density (as determined according to ASTM D-792) of from 0.915 to 0.935 g/cm³, preferably from 9.915 to 0.930. The term "high density polyethylene" or "HDPE" for purposes of this invention indicates linear polyethylene having a density greater than 0.940 g/cm³. The preferred HDPE has a melt index of from 0.5 to 10 g/10 min, more preferably from 2 to 10 g/10 min. Ethylene acrylic copolymers ("EAA") or ethylene (meth) acrylic acid copolymers ("EMAA") refers to copolymers derived from ethylene acrylic acid or methacrylic acid, respectively. Preferred EAA or EMAA copolymers comprise from 3 to 20 percent by weight of units derived from the carboxylic acid copolymer. Suitable carboxyl-containing polymers include those sold under the trade name PRIMACOR™ by the Dow Chemical Company.

Where the EPBP is blended with the second polymer in at least one layer, the EPBP comprise from 5 to 80 percent by weight of the layer, preferably from 30 to 80%, more preferably from 40 to 80%. The second polymer comprises from 20 to 60%. The random copolymer polypropylene resin, is present in an amount of from 30 to 70 percent by weight of the layer, more preferably from 40 to 70%, still more preferably from 50 to 70% and/or homopolymer polypropylene preferably in an amount of from 5 to 10 percent by weight of the layer.

For the embodiments where the EPBP and second polymer are in separate layers, it is preferred that each layer consists essentially of the pure EPBP or pure second polymer together with any additives. In such embodiments, no blending morphology to create immiscible phases is involved, and thus fluctuations from minor variations in the fabrication process are minimized. It is contemplated that the inner portion of the films of this embodiment of the present invention may comprise as few as two separate layers, but may also comprise a series of microlayers. "Microlayers" refers to sequences comprising a number, n, of repeating units, each repeating unit comprising at least two microlayers, (a) and (b), wherein one layer comprises PBPE and the other layer comprises the second polymer, such that the resulting structure has the formula [(a)(b)]ₙ. "n" is defined by the multiplicator feedblock of the microlayer extruder. The repeating microlayer sequence may also optionally contain one or more additional repeating layers layers (c), (d), etc., or a non-repeating layer commonly called an encapsulating layer. The overall thickness can be similar to classical blown or cast films, for example 25 to 200 µm (microns). The ratios of the individual layers can be adjusted depending on the desired characteristics of the film but typically the ratios of A/B, A/C and B/C are in the range of from 0.2 to 0.8, and the ratio of the encapsulating layer (if present) to the repeating portion of the microlayer film is typically between 0.025 to 0.8. The multilayer films of the present invention further comprise a second outer layer arranged so that the inner portion is encapsulated between the first outer layer and the second outer layer. It should be understood that the term "encapsulate" as used herein refers to the planar surfaces; it is not necessary that the edges of the inner portion are also encapsulated by the first outer layer and second outer layer.

The second outer layer comprises a third polymer, wherein said third polymer is selected from the group consisting of homopolymer polypropylene, random copolymer polypropylene and impact copolymer polypropylene and blends thereof. The preferences described for the first polymer are applicable for the third polymer, and in fact the third polymer may be the same as the first polymer. In general it is preferred that the MFR of the third polymer be from 0.5 to 35 g/10 min (as determined according to ASTM D1238, 2.16 kg, 230°C), more preferably from 2 to 10 g/10 min. The particular MFR selected will depend in part on the intended fabrication methods such as blown film, extrusion coating, sheet extrusion, or cast film processes.

Optionally, the multilayered films of the present invention may contain one or more additional layers to provide additional functionality. For example layers comprising ethylene vinyl alcohol polymers or polyamide polymers may be added to provide additional structural stability and/or barrier properties.

It is preferred that the first outer layer has a thickness less than 30 µm (microns), preferably less than 20 µm (microns), more preferably 10 µm (microns) or less. The thickness of first outer layer determines force needed to initiate burst. Accordingly thinner films will require less force to initiate the burst. Once burst has been initiated, the film will be easy-opening, theoretically according to either the cohesive failure or delamination mechanism as described above. However, it should also be understood that thinner films will be more susceptible to damage during the retort process. Accordingly the first outer layer thickness should be optimized to achieve a proper balance of these properties.

It is preferred that the film have a total thickness of less than 200 µm (microns), more preferably less than 150 µm (microns).

### EXAMPLES

In order to demonstrate the utility of the present invention a series of multilayer films were made using the resins described in Table I

### Examples

**Table I Resins used in the examples)**

| Resin | Description | Comonomer | Melt index* (g/10 min) | Density (g/cm3) | MFR** (g/10min) | Melting Point (ºC) |
|---|---|---|---|---|---|---|
| **A** | Random Copolymer Polypropylene | Ethylene | | 0.900 | 2 | 144 |
| **B** | Impact Copolymer Polypropylene | Ethylene | | 0.902 | 0.5 | 164 |
| **C** | Impact Copolymer Polypropylene | Ethylene | | 0.900 | 0.8 | 164 |
| **D** | Homopolymer Polypropylene | None | | 0.900 | 2.1 | 164 |
| **E** | High Pressure LDPE | None | 0.75 | 0.924 | | 112 |
| **F** | High Pressure LDPE | None | 2 | 0.925 | | 114 |
| **G** | High Pressure LDPE | None | 2 | 0.920 | | 110 |
| **H** | PBPE | 9%wt Ethylene | | 0.876 | 2 | 82 |
| **I** | PBPE | 5%wt Ethylene | | 0.888 | 2 | 107 |
| * at 190ºC under 2.16kg | | | | | | |
| ** at 230ºC under 2.16kg | | | | | | |

The following test methods are used to determine the values reported in Table 2:
Haze (%) is determined according to ASTM D1003-11

Heat Seal Initiation Temperature (HSIT) (ºC) is determined according to ASTMF2029-00 with a visual inspection of the resulting heat seal curve for the determination of temperature at which seal strength curve rises higher than 2 N/15mm.

Burst peak Strength (N/15 mm) is determined according to ASTM F2029-00 with a visual inspection of the resulting seal curve, to determine the peak seal strength over full sealing temperature range.

Peel Plateau Strength (N/15mm) is determined according to ASTM F2029-00 with a visual inspection of the resulting seal curve, section of seal curve after (peak), determination of temperature range at which seal strength variation is less than 2N/15mm over the range.

Seal Window (°C) is determined according to ASTM F2029-00 with a visual inspection of the resulting seal curve to determine the temperature range in which all seal strengths are higher than 2 N/15 mm.

**Table II -Examples of A) - Encapsulated cohesive peel layer for a burst cohesive failure mechanism**

| | Example 1 | Example 2 | Example 3 |
|---|---|---|---|
| | | | |
| Film Structure | A/B/C 70/20/10 | A/B/C 70/20/10 | A/B/C 70/20/10 |
| Film thickness (µm) ((microns)) | 100 | 100 | 100 |
| Layer A | 100% Resin A | 100% Resin A | 100% Resin A |
| Layer B | Compound: 50% Resin H + 50% Resin F | Compound: 35% Resin A + 15% Resin H + 50% Resin F | Compound: 33% Resin A + 2% Resin D + 15% Resin H + 50% Resin F |
| Layer C | 100% Resin A | 100% Resin A | 100% Resin A |
| Layer D | none | none | none |
| Layer E | none | none | none |
| Failure mode | Burst + Delaminating Failure | Burst + Delaminating Failure | Burst + Delaminating Failure |
| Haze before Retort(%) | 6 | 4 | 9 |
| Haze after Retort (%) | 16 | 13 | 15 |
| Seal properties before Retort: | | | |
| HSIT (°C) | 130 | 130 | 130 |
| Burst peak Strength | 8 - 10 N/15 mm (3 - 4 lb/in) | 7 N/15 mm (2.8 lb/in) | 7 N/15 mm (2.8 lb/in) |
| Peel plateau Strength | 4 N/15 mm (1.5 lb/in) | 2 N/15 mm (0.8 lb/in) | 2 N/15 mm (0.8 lb/in) |
| Seal properties After Retort: | | | |
| HSIT (°C) | 130 | 130 | 130 |
| Burst peak Strength (N/15 mm) | 8 - 10 N/15 mm (3 - 4 lb/in) | 7 N/15 mm (2.8 lb/in) | 7 N/15 mm (2.8 lb/in) |
| Peel plateau Strength (N/15 mm) | 4 N/15 mm (1.5 lb/in) | 2 N/15 mm (0.8 lb/in) | 2 N/15 mm (0.8 lb/in) |

**Table II2**

| | Example 4 | Example 5 | Example 6 | Example 7 | Example 8 |
|---|---|---|---|---|---|
| Film Structure | A/A/B/A 35/35/20/10 | A/C/B/C 35/35/20/10 | A/A/B/A 35/35/20/10 | A/C/B/C 35/35/20/10 | A/C/B/C 35/35/20/10 |
| Film thickness (µm) ((microns)) | 100 | 100 | 100 | 100 | 100 |
| Layer A | 100% Resin A | 100% Resin A | 100% Resin A | 100% Resin A | 100% Resin A |
| Layer B | Compound: 35% Resin A, 45% Resin E, 15 % Resin I, 5% Resin K | Compound: 35% Resin A, 45% Resin E, 15 % Resin I, 5% Resin K | Compound: 35% Resin A, 35% Resin E, 15 % Resin I, 15% Resin K | Compound: 35% Resin A, 50% Resin E, 15% Resin I | Compound: 55% Resin A, 30% Resin E, 15 % Resin I |
| Layer C | none | 85% Resin A, 15% Resin K | none | 95% Resin A, 5% Resin J | 95% Resin A, 5% Resin J |
| Haze before Retort (%) | 3.67 | 28.6 | 4.27 | 3.45 | 4.02 |
| Haze after Retort (%) | 13.6 | 38.7 | 14.3 | 13 | 14.5 |
| Seal properties before Retort: | | | | | |
| HSIT (°C) | 130 | 130 | 130 | 130 | 130 |
| Burst peak Strength | 7 N/15 mm (lb/in) | 8 N/15 mm (lb/in) | 12 N/15 mm (lb/in) | 8 N/15 mm (lb/in) | 10 N/15 mm (lb/in) |
| Peel plateau Strength | 2 N/15 mm (lb/in) | 2 N/15 mm (lb/in) | 1N/15 mm (lb/in) | 2.5 N/15 mm (lb/in) | 3 N/15 mm (lb/in) |
| Seal properties After Retort: | | | | | |
| HSIT (°C) | 130 | 130 | 130 | 130 | 130 |
| Burst peak Strength | 8 N/15 mm (lb/in) | 9 N/15 mm (lb/in) | 8.5 N/15 mm (lb/in) | 9 N/15 mm (lb/in) | 16 N/15 mm (lb/in) |
| Peel plateau Strength | 1 N/15 mm (lb/in) | 1.5 N/15 mm (lb/in) | 1.5 N/15 mm (lb/in) | 2 N/15 mm (lb/in) | 3 N/15 mm (lb/in) |

**Table III Examples of B) - Encapsulated delamination peel layers for a burst delaminating failure mechanism**

| | Example 9 | Example 10 |
|---|---|---|
| | | |
| Film Structure | A/B/C/D/E 40/10/30/10/10 | A/B/C/D/E 40/10/30/10/10 |
| Film thickness (µm) ((microns)) | 100 | 100 |
| Layer A | 100% Resin A | 100% Resin A |
| Layer B | 100% Resin I | 100% Resin H |
| Layer C | 100% Resin E | 100% Resin E |
| Layer D | 100% Resin I | 100% Resin H |
| Layer E | 100% Resin A | 100% Resin A |
| Failure mode | Burst + Delaminating Failure | Burst + Delaminating Failure |
| Haze before Retort (%) | 5 | 8 |
| Haze after Retort (%) | 16 | 20 |
| Seal properties before Retort: | | |
| HSIT (°C) | 130 | 130 |
| Burst peak Strength | 8 - 10 N/15 mm (3 - 4 lb/in) | 8 - 10 N/15 mm (3 - 4 lb/in) |
| Peel plateau Strength | 0.5 N/15 mm (0.2 lb/in) | 1 N/15 mm (0.4 lb/in) |
| Seal properties After Retort: | | |
| HSIT (°C) | 130 | 130 |
| Burst peak Strength | 8 N/15 mm (3 lb/in) | 5 N/15 mm (2 lb/in) |
| Peel plateau Strength | 0.5 N/15 mm (0.2 lb/in) | 0.5 N/15 mm (0.2 lb/in) |

## Claims

1. A multilayer film comprising:
a. a first outer layer which is heat sealable, said first outer layer comprising from 95 to 100 percent by weight of the first outer layer of a first polymer, said first polymer being derived from propylene and optionally one or more comonomers selected from the group consisting of ethylene and C₄-C₈ alpha olefins, said first polymer having a melting point of at least 125°C;
b. an inner portion adjacent to the first outer layer, said inner portion comprising (i) from 5 to 80 percent by weight of the inner portion of an elastomeric propylene based polymer; (ii) from 30 to 70 percent by weight of the inner portion of a random copolymer derived from propylene and one or more additional comonomers selected from the group consisting of ethylene, and C₄-C₈ alpha olefins; and (iii) from 20 to 60 percent by weight of the inner portion of a second polymer, wherein the second polymer is selected from the group consisting of high pressure low density polyethylene, high density polyethylene, ethylene acrylic acid copolymers, ethylene (meth) acrylic acid copolymers and combinations thereof;
c. optionally one or more additional layers; and
d. a second outer layer arranged so that the inner portion is encapsulated between the first outer layer and the second outer layer, said second outer layer comprising a third polymer, wherein said third polymer is selected from the group consisting of homopolymer polypropylene, random copolymer polypropylene and impact copolymer polypropylene and blends thereof.

2. The film of claim 1 wherein the inner portion further comprises:
a. from 5 to 10 percent by weight of the inner portion of a homopolypropylene.

3. The film of claim 1 wherein the elastomeric propylene based polymer has an MFR of from 2 to 25 g/10 min determined according to ASTM D1238 at 2.16 kg and at 230°C, and a density of from 0.850 to 0.890 g/cm³.

4. The film of claim 1 wherein the random copolymer has an MFR of from 0.5 to 5 g/10 min determined according to ASTM D1238 at 2.16 kg and at 230°C, and a density of from 0.90 to 0.902 g/cm³.

5. The film of claim 1 wherein the third polymer is homopolymer polypropylene and wherein the homopolymer polypropylene has an MFR of from 0.5 to 10 g/10 min determined according to ASTM D1238 at 2.16 kg and at 230°C.

6. The film of claim 1 wherein the second polymer is a high pressure low density polyethylene and has an MI of from 0.5 to 35 g/10 min determined according to ASTM D1238 at 2.16 kg and at 230°C, and a density of from 0.915 to 0.932 g/cm³.

7. The film of claim 1 wherein the second polymer is a high density polyethylene and has an MI of from 0.5 to 10 g/10 min determined according to ASTM D1238 at 2.16 kg and at 230°C, and a density of from 0.94 to 0.96 g/cm³.

8. The film of claim 1 wherein the second polymer is an ethylene acrylic acid copolymer or an ethylene (meth)acrylic acid copolymer and has an MI of from 0.5 to 10 g/10 min determined according to ASTM D1238 at 2.16 kg and at 230°C, and a comonomer content of from 3 to 20 percent by weight of the ethylene acrylic acid copolymer or ethylene (meth)acrylic acid copolymer.

9. The film of claim 1 wherein the first outer layer further comprises from 0.1 to 5 percent by weight of the first outer layer, of an elastomeric propylene based polymer, which may be the same or different from the elastomeric propylene based polymer(s) used in the inner portion.

10. The film of Claim 1 wherein the first polymer has an MFR of from 0.5 to 5 g/10 min determined according to ASTM D1238 at 2.16 kg and at 230°C, and a density of from 0.90 to 0.902 g/cm³.

11. The film of claim 1 wherein the third polymer has an MFR of from 0.5 to 5 g/10 min determined according to ASTM D1238 at 2.16 kg and at 230°C.

12. The film of claim 1 wherein the second outer layer further comprises a barrier structure comprised of ethyl vinyl alcohol or a polyamide.

13. The film of claim 12 wherein the barrier structure is coextruded as a separate layer.

14. The film of claim 1 wherein the film further comprises one or more non-surface layers in addition to the inner portion.

15. The film of claim 1 wherein the first polymer is a polypropylene.

## Patentansprüche

1. Eine Mehrschichtfolie, die Folgendes beinhaltet:
a. eine erste äußere Schicht, die heißsiegelbar ist, wobei die erste äußere Schicht zu 95 bis 100 Gewichtsprozent der ersten äußeren Schicht ein erstes Polymer beinhaltet, wobei das erste Polymer von Propylen und optional einem oder mehreren Comonomeren abgeleitet ist, die ausgewählt sind aus der Gruppe, bestehend aus Ethylen und C₄-C₈-alpha-Olefinen, wobei das erste Polymer einen Schmelzpunkt von mindestens 125 °C aufweist;
b. einen inneren Abschnitt, der an die erste äußere Schicht angrenzt, wobei der innere Abschnitt Folgendes beinhaltet: (i) zu 5 bis 80 Gewichtsprozent des inneren Abschnitts ein elastomeres Polymer auf Propylenbasis; (ii) zu 30 bis 70 Gewichtsprozent des inneren Abschnitts ein statistisches Copolymer, abgeleitet von Propylen und einem oder mehreren zusätzlichen Comonomeren, ausgewählt aus der Gruppe, bestehend aus Ethylen und C₄-C₈-alpha-Olefinen; und (iii) zu 20 bis 60 Gewichtsprozent des inneren Abschnitts ein zweites Polymer, wobei das zweite Polymer ausgewählt ist aus der Gruppe, bestehend aus Hochdruckpolyethylen niederer Dichte, Polyethylen hoher Dichte, EthylenAcrylsäure-Copolymeren, Ethylen-(Meth)acrylsäure-Copolymeren und Kombinationen daraus;
c. optional eine oder mehrere zusätzliche Schichten; und
d. eine zweite äußere Schicht, die derart angeordnet ist, dass der innere Abschnitt zwischen der ersten äußeren Schicht und der zweiten äußeren Schicht eingekapselt ist, wobei die zweite äußere Schicht ein drittes Polymer beinhaltet, wobei das dritte Polymer aus der Gruppe ausgewählt ist, die aus Homopolymer-Polypropylen, statistischem Copolymer-Polypropylen und schlagfestem Copolymer-Polypropylen und Gemischen daraus besteht.

2. Folie gemäß Anspruch 1, wobei der innere Abschnitt ferner Folgendes beinhaltet:
a. zu 5 bis 10 Gewichtsprozent des inneren Abschnitts ein Homopolypropylen.

3. Folie gemäß Anspruch 1, wobei das elastomere Polymer auf Propylenbasis eine MFR von 2 bis 25 g/10 min, bestimmt gemäß ASTM D1238 bei 2,16 kg und bei 230 °C, und eine Dichte von 0,850 bis 0,890 g/cm³ aufweist.

4. Folie gemäß Anspruch 1, wobei das statistische Polymer eine MFR von 0,5 bis 5 g/10 min, bestimmt gemäß ASTM D1238 bei 2,16 kg und bei 230 °C, und eine Dichte von 0,90 bis 0,902 g/cm³ aufweist.

5. Folie gemäß Anspruch 1, wobei das dritte Polymer ein Homopolymer-Polypropylen ist und wobei das Homopolymer-Polypropylen eine MFR von 0,5 bis 10 g/10 min, bestimmt gemäß ASTM D1238 bei 2,16 kg und bei 230 °C, aufweist.

6. Folie gemäß Anspruch 1, wobei das zweite Polymer ein Hochdruckpolyethylen niederer Dichte ist und einen MI von 0,5 bis 35 g/10 min, bestimmt gemäß ASTM D1238 bei 2,16 kg und bei 230 °C, und eine Dichte von 0,915 bis 0,932 g/cm³ aufweist.

7. Folie gemäß Anspruch 1, wobei das zweite Polymer ein Hochdruckpolyethylen ist und einen MI von 0,5 bis 10 g/10 min, bestimmt gemäß ASTM D1238 bei 2,16 kg und bei 230 °C, und eine Dichte von 0,94 bis 0,96 g/cm³ aufweist.

8. Folie gemäß Anspruch 1, wobei das zweite Polymer ein Ethylen-Acrylsäure-Copolymer oder ein Ethylen-(Meth)acrylsäure-Copolymer ist und einen MI von 0,5 bis 10 g/10 min, bestimmt gemäß ASTM D1238 bei 2,16 kg und bei 230 °C, und einen Comonomergehalt von 3 bis 20 Gewichtsprozent des Ethylen-Acrylsäure-Copolymers oder Ethylen-(Meth)acrylsäure-Copolymers aufweist.

9. Folie gemäß Anspruch 1, wobei die erste äußere Schicht ferner zu 0,1 bis 5 Gewichtsprozent der ersten äußeren Schicht ein elastomeres Polymer auf Propylenbasis beinhaltet, welches das gleiche wie das/die in dem inneren Abschnitt verwendete(n) elastomere(n) Polymer(e) auf Propylenbasis sein kann oder sich von diesem/diesen unterscheiden kann.

10. Folie gemäß Anspruch 1, wobei das erste Polymer eine MFR von 0,5 bis 5 g/10 min, bestimmt gemäß ASTM D1238 bei 2,16 kg und bei 230 °C, und eine Dichte von 0,90 bis 0,902 g/cm³ aufweist.

11. Folie gemäß Anspruch 1, wobei das dritte Polymer eine MFR von 0,5 bis 5 g/10 min, bestimmt gemäß ASTM D1238 bei 2,16 kg und bei 230 °C, aufweist.

12. Folie gemäß Anspruch 1, wobei die zweite äußere Schicht ferner eine Barrierestruktur beinhaltet, die aus Ethylvinylalkohol oder einem Polyamid besteht.

13. Folie gemäß Anspruch 12, wobei die Barrierestruktur als separate Schicht coextrudiert wird.

14. Folie gemäß Anspruch 1, wobei die Folie zusätzlich zu dem inneren Abschnitt ferner eine oder mehrere nichtoberflächliche Schichten beinhaltet.

15. Folie gemäß Anspruch 1, wobei das erste Polymer ein Polypropylen ist.

## Revendications

1. Un film multicouche comprenant :
a. une première couche extérieure qui est thermoscellable, ladite première couche extérieure comprenant de 95 à 100 pour cent en poids de la première couche extérieure d'un premier polymère, ledit premier polymère étant dérivé du propylène et éventuellement un ou plusieurs comonomères sélectionnés dans le groupe constitué de l'éthylène et des alpha-oléfines en C₄ à C₈, ledit premier polymère ayant un point de fusion d'au moins 125 °C ;
b. une portion intérieure adjacente à la première couche extérieure, ladite portion intérieure comprenant (i) de 5 à 80 pour cent en poids de la portion intérieure d'un polymère à base de propylène élastomère ; (ii) de 30 à 70 pour cent en poids de la portion intérieure d'un copolymère aléatoire dérivé du propylène et un ou plusieurs comonomères supplémentaires sélectionnés dans le groupe constitué de l'éthylène, et des alpha-oléfines en C₄ à C₈ ; et (iii) de 20 à 60 pour cent en poids de la portion intérieure d'un deuxième polymère, le deuxième polymère étant sélectionné dans le groupe constitué du polyéthylène basse densité haute pression, du polyéthylène haute densité, des copolymères éthylène acide acrylique, des copolymères éthylène acide (méth)acrylique et des combinaisons de ceux-ci ;
c. éventuellement une ou plusieurs couches supplémentaires ; et
d. une deuxième couche extérieure disposée de telle sorte que la portion intérieure soit encapsulée entre la première couche extérieure et la deuxième couche extérieure, ladite deuxième couche extérieure comprenant un troisième polymère, ledit troisième polymère étant sélectionné dans le groupe constitué du polypropylène homopolymère, du polypropylène copolymère aléatoire et du polypropylène copolymère d'impact et des mélanges homogènes de ceux-ci.

2. Le film de la revendication 1 dans lequel la portion intérieure comprend en outre :
a. de 5 à 10 pour cent en poids de la portion intérieure d'un homopolypropylène.

3. Le film de la revendication 1 dans lequel le polymère à base de propylène élastomère possède un IFC allant de 2 à 25 g/10 min déterminé selon l'ASTM D1238 à 2,16 kg et à 230 °C, et une masse volumique allant de 0,850 à 0,890 g/cm³.

4. Le film de la revendication 1 dans lequel le copolymère aléatoire possède un IFC allant de 0,5 à 5 g/10 min déterminé selon l'ASTM D1238 à 2,16 kg et à 230 °C, et une masse volumique allant de 0,90 à 0,902 g/cm³.

5. Le film de la revendication 1 dans lequel le troisième polymère est le polypropylène homopolymère et dans lequel le polypropylène homopolymère possède un IFC allant de 0,5 à 10 g/10 min déterminé selon l'ASTM D1238 à 2,16 kg et à 230 °C.

6. Le film de la revendication 1 dans lequel le deuxième polymère est un polyéthylène basse densité haute pression et possède un IM allant de 0,5 à 35 g/10 min déterminé selon l'ASTM D1238 à 2,16 kg et à 230 °C, et une masse volumique allant de 0,915 à 0,932 g/cm³.

7. Le film de la revendication 1 dans lequel le deuxième polymère est un polyéthylène haute densité et possède un IM allant de 0,5 à 10 g/10 min déterminé selon l'ASTM D1238 à 2,16 kg et à 230 °C, et une masse volumique allant de 0,94 à 0,96 g/cm³.

8. Le film de la revendication 1 dans lequel le deuxième polymère est un copolymère éthylène acide acrylique ou un copolymère éthylène acide (méth)acrylique et possède un IM allant de 0,5 à 10 g/10 min déterminé selon l'ASTM D1238 à 2,16 kg et à 230 °C, et une teneur en comonomère allant de 3 à 20 pour cent en poids du copolymère éthylène acide acrylique ou du copolymère éthylène acide (méth)acrylique.

9. Le film de la revendication 1 dans lequel la première couche extérieure comprend en outre de 0,1 à 5 pour cent en poids de la première couche extérieure, d'un polymère à base de propylène élastomère, qui peut être identique ou différent du ou des polymère(s) à base de propylène élastomère utilisé(s) dans la portion intérieure.

10. Le film de la revendication 1 dans lequel le premier polymère possède un IFC allant de 0,5 à 5 g/10 min déterminé selon l'ASTM D1238 à 2,16 kg et à 230 °C, et une masse volumique allant de 0,90 à 0,902 g/cm³.

11. Le film de la revendication 1 dans lequel le troisième polymère possède un IFC allant de 0,5 à 5 g/10 min déterminé selon l'ASTM D1238 à 2,16 kg et à 230 °C.

12. Le film de la revendication 1 dans lequel la deuxième couche extérieure comprend en outre une structure de barrière constituée d'alcool éthylvinylique ou un polyamide.

13. Le film de la revendication 12 dans lequel la structure de barrière est coextrudée en tant que couche séparée.

14. Le film de la revendication 1 dans lequel le film comprend en outre une ou plusieurs couches non superficielles en plus de la portion intérieure.

15. Le film de la revendication 1 dans lequel le premier polymère est un polypropylène.
